# EUROPÄISCHE PATENTSCHRIFT

(11) **EP 0 473 927 B1**
(45) Veröffentlichungstag und Bekanntmachung des Hinweises auf die Patenterteilung: **07.12.1994**
(21) Anmeldenummer: 91112508.6
(22) Anmeldetag: 25.07.1991
(51) Int. Cl.: G05B 19/42

(54) **Bildhauerkopiermaschine**
Sculpture copying machine
Machine pour copier des sculptures

(30) Priorität: 06.09.1990 DE 4028324
(43) Veröffentlichungstag der Anmeldung: 11.03.1992
(73) Patentinhaber: Maschinenfabrik Reichenbacher GmbH, 96487 Dörfles-Esbach (DE)
(72) Erfinder: Reichenbacher, Winfried, Dipl.-Ing., W-8635 Dörfles-Esbach (DE)
(74) Vertreter: Füchsle, Klaus, Dipl.-Ing.

(56) Entgegenhaltungen:
- EP-A- 0 077 906
- EP-A- 0 205 975
- EP-A- 0 328 650
- EP-A- 0 328 750
- DE-A- 3 014 466
- DE-A- 3 324 739
- US-A- 4 268 949

## Beschreibung

Die Erfindung betrifft eine Vorrichtung zum automatischen Herstellen von Formteilen, insbesondere von kompliziert geformten Formteilen aus Holz oder Kunststoff gemäß dem Oberbegriff des Anspruchs 1. Eine derartige Vorrichtung eignet sich insbesondere als Bildhauerkopiermaschine. Die Vorrichtung besteht aus einer Fertigungseinrichtung, welche mit mindestens einem Bearbeitungsaggregat versehen ist, das mit mehreren Vorschubachsen geführt wird und dabei einen Rohling bearbeitet, um aus diesem einen zu kopierenden Gegenstand herauszuarbeiten. Ein solches Bearbeitungsaggregat ist zum Beispiel ein Fräsgerät. Die Vorschubachsen der Vorrichtung werden mit einem Steuerrechner gesteuert. Die Steuerung erfolgt anhand eines gespeicherten Steuerprogramms, das aus programmierten oder gemessenen Daten besteht.

Aus dem Stand der Technik ist es bekannt, an einer Vorrichtung ein Modell abzutasten und gleichzeitig Kopien herzustellen. Eine solche Vorrichtung ist z.B. ein Kopierpanthograph. Jedoch ist einerseits die Bedienung eines Kopierpanthographen körperlich anstrengend, andererseits führt sie zu ungenauen Ergebnissen, weil die Bearbeitungsaggregate zur Fertigung von Hand bewegt werden müssen.

Es sind außerdem verschiedene NC-gesteuerte Vorrichtungen bekannt, bei denen die Bearbeitung von Objekten automatisch, gesteuert von einem Steuerrechner nach einem Steuerprogramm, erfolgt.

Es sind schließlich Verfahren bekannt, mit denen die Form eines abzutastenden Modells erfaßt werden kann. Dazu werden verschiedenartige Sensoren eingesetzt, mit denen automatisch oder manuell die Raumkontur des zu erfassenden Gegenstandes in einem Raster abgetastet wird.

Um aber komplizierte Formteile, wie zum Beispiel Kunstgegenstände, Schnitzarbeiten oder ähnliches mit einer hohen Originalgetreue kopieren zu können, reicht die mit vollautomatischen Verfahren erreichbare Genauigkeit nicht aus. Insbesondere wird die Art der Werkzeugführung einer erfahrenen Bedienungsperson nicht berücksichtigt. Es ist daher nötig, die Bearbeitungsschritte, die eine Bedienungsperson bei der Herstellung eines solchen Gegenstandes durchgeführt hat, bei der Fertigung in gleicher Weise zu wiederholen. Eine automatische Abtastung eines Modells kann in diesem Falle keine hinreichende Genauigkeit erzeugen.

Eine vorrichtung nach dem Oberbegriff des Anspruch 1 ist aus der DE-OS 30 14 466 bekannt. Bei dieser ist an einem herkömmlichen Kopierpathographen an den Achsen ein Winkelgeber vorgesehen, so daß die Winkel bei dem Kopiervorgang aufgenommen werden können. In einer programmierbaren Steuerung erfolgt eine Umrechnung der gemessenen Winkel in kartesische Koordinaten, mit denen auf einer getrennten Mehrachsfräsmaschine demgemäß die Herstellung erfolgt.

Weil separate Aufnahme- und Herstellungsvorrichtungen verwendet werden, ist eine absolut originalgetreue Herstellung des abgetasteten Modells ebenfalls nicht gewährleistet, da nicht identische Aufnahme- und Herstellungsvorrichtungen vorgesehen sind. Außerdem entsteht ein hoher Aufwand, weil zwei Vorrichtungen notwendig sind und der Auslastungsgrad der Aufnahmevorrichtung naturgemäß sehr gering ist.

Die Belastung der Bedienungsperson ist außerdem immer noch zu groß, weil eine herkömmliche Vorrichtung für die Aufnahme der Meßdaten verwendet wird. Zudem ist die erreichbare Genauigkeit dadurch reduziert, daß nur bestimmte Werte erfaßt werden.

Des weiteren besteht bei bekannten Vorrichtungen der Nachteil, daß durch einen großen mechanischen Widerstand bei der Abtastung eines Modells die der Anfertigung des Originals entsprechenden Bewegungen nicht originalgetreu aufgenommen werden können.

Es verbietet sich auch die ausschließliche Verwendung eines sogenannten CAD-Programmes, um das Steuerprogramm zu erstellen. Mit einem solchen Programm können einerseits nicht Formen von hoher Komplexität erzeugt werden, andererseits wirken so erzeugte Formen wegen zu großer Gleichmäßigkeit künstlich.

Aus der EP-A-0 077 906 ist ein programmgesteuerter Manipulator bekannt, bei dem eine doppelte Sicherheitsschaltung vorgesehen ist, die sicherstellt, daß beim Programmieren des Manipulators von Hand die Antriebe der Manipulatorarme nicht eingeschaltet werden können. Die Sicherheitsschaltung trennt die Antriebe von ihrer Energiezufuhr ab und löst gleichzeitig mechanisch die Antriebe über eigene Kupplungen von ihren Armen.

Ferner beschreibt die EP-A-0 328 650 ein Verfahren zur Direkteingabe von Daten bei einem Industrieroboter.

Schließlich ist in der EP-A-0 205 975 ein Industrieroboter beschrieben, bei dem ebenfalls ein manuelles Bewegen des Armes zum Programmieren des Roboters möglich ist.

Aufgabe der Erfindung ist es, eine Vorrichtung nach dem Oberbegriff des Patentanspruchs 1 zu schaffen, mit der die notwendigen Meßdaten einfach und mit wenig Aufwand aufgenommen werden können, wobei gleichzeitig eine Kopie gefertigt werden kann und wobei mit der gleichen Vorrichtung eine automatische Herstellung beliebig vieler Repliken sichergestellt ist. Hierbei soll die Bedienungsperson nur gering belastet werden und die erhaltenen Meßdaten müssen so umfassend sein, daß eine möglichst hohe Originaltreue durch eine hohe Wiedergabepräzision unter Berücksichtigung aller Fertigungsparameter erreicht wird.

Diese Aufgabe wird durch die Merkmale des Patentanspruchs 1 gelöst.

Die Erfindung weist die folgenden Vorteile auf:
- Es ist nur eine Vorrichtung zum automatischen Herstellen und zur Meßdatenaufnahme erforderlich.
- Die Bedienungsperson wird nur durch geringe Kräfte belastet.
- Die Aufnahme erfolgt entsprechend dem Herstellungsvorgang.
- Ein optimaler Fertigungsverlauf wird für die Bedienungsperson an der auf der Herstellungsvorrichtung gleichzeitig gefertigten Kopie leicht sichtbar und korrigierbar.
- Die Verwendung von geregelten Servoantrieben sorgt für eine hohe Herstellungsgenauigkeit und eine geringe Belastung der Bedienungsperson.
- Durch die Aufnahme aller relevanten Bewegungsdaten wird eine hohe Güte und Wiedergabepräzision erreicht, wobei selbst feinste Details originalgetreu wiedergegeben werden.

Es werden im folgenden verschiedene Weiterbildungen der Erfindung beschrieben.

Gemäß einer Weiterbildung der Erfindung werden nicht nur die Raumkoordinaten oder Bahnpunkte, sondern alle spezifischen Fertigungsdaten aufgenommen, so zum Beispiel der erforderliche Werkzeugvorschub, die Spantiefe oder die Beschleunigung bei einer Richtungsumkehr.

Durch die Bearbeitung der gespeicherten Meßdaten in einem Steuerrechner sind nachträgliche Veränderungen und Optimierungen des Herstellungsverlaufes möglich.

Um die Aufnahme der Meßdaten von Hand vorzunehmen, werden die Antriebe und Antriebselemente automatisch von den Vorschubachsen getrennt, indem zum Beispiel die Erregung eines Servomotors abgeschaltet wird oder indem eine mechanische Kupplung betätigt wird. Weil Rollkörperführungen eingesetzt werden, müssen von Hand nur leichte Schiebekräfte aufgebracht werden. Auftretende vertikale Gewichtskräfte werden durch Gewichtsausgleich ausgeglichen.

Eine Rundachse wird direkt von einem geregelten Servoantrieb mit einem Asynchronmotor angetrieben. Zum automatischen Abtrennen des Antriebs von der Achse wird die Erregung des Motors abgeschaltet.

Eine Linearachse wird von einem Linear-Asynchronmotor angetrieben. Um den Kraftfluß zwischen dem Antrieb und dem mit dem Taster zum Abtasten des Modells verbundenen Teil der Vorrichtung zu unterbrechen, wird die Erregung des Linear-Asynchronmotors abgeschaltet.

Der mit dem Taster versehene Teil der Vorrichtung ist insbesondere ein Vorschubschlitten, der auf der Vorschubachse in deren Richtung bewegbar ist. Solange der Kraftfluß vom Antrieb nicht unterbrochen ist, wird der Vorschubschlitten von den Motoren angetrieben. Nach Abtrennung des Kraftflußes, beispielsweise durch Abschalten der Erregung, ist der Vorschubschlitten von Hand bewegbar.

Es ist möglich, daß auf dem Vorschubschlitten nicht nur der Taster, sondern auch ein Bearbeitungsaggregat angeordnet ist.

Gemäß einer weiteren Weiterbildung der Erfindung ist nur ein kleiner Teil der Vorrichtung mit dem Taster zur Meßdatenaufnahme von Hand beweglich. Die Vorschubachsen bleiben mit den Antrieben verbunden. Mit einem Positionssensor wird die Abweichung der Position des Tasters, bzw. des beweglichen Teils, von der Vorschubposition der Vorschubachsen gemessen und an eine Regelvorrichtung weitergeleitet. Diese steuert die Servoantriebe der Vorschubachsen so nach, daß die Vorschubposition die Position des von Hand beweglichen Teils einnimmt, d.h. daß die gemessene Abweichung null wird. In dieser Ausführungsform werden die auftretenden Reibungs- und Gewichtskräfte hauptsächlich von den Antriebsmotoren überwunden, und nur zu einem kleinen Teil von der Bedienungsperson.

Die verschiedenen Ausführungsformen, insbesondere der Antriebformen, Vorschubachsen und Einrichtungen zum Unterbrechen des Kraftflußes, sind miteinander kombinierbar, indem beispielsweise eine Linearachse mit einer Rundachse sowie jeweils unterschiedlichen Antrieben kombiniert sind.

Die Aufnahme der Daten geschieht zu diskreten Zeitpunkten nach einem Steuertakt, der so bemessen ist, daß eine zulässige Fehlertoleranz nicht überschritten wird.

Bei der Ausführungsform mit nachsteuernder Vorschubposition ist es möglich, den Kraftfluß ab einer bestimmten gemessenen Abweichung der Positionen oder bei Überschreitung einer maximal erlaubten Aufnahmegeschwindigkeit wieder automatisch zuzuschalten, so daß die Aufnahmegeschwindigkeit auf einen maximalen Wert begrenzt wird.

Um den Konturverlauf des Modells möglichst exakt aufzuzeichnen, wird bei der Meßdatenaufnahme ein hoher Steuertakt gewählt. Bei der Wiedergabe und der Herstellung eines Formteils wird ein anderer Takt mit der Periode tᵢₚₒ verwendet. Die Bahngeschwindigkeit v wird automatisch reduziert, falls der Abstand zwischen zwei Bahnpunkten eine Mindestentfernung von v x tᵢₚₒ unterschreitet. Diese Taktanpassung wird in einer Offline-Optimierung der Daten im Steuerrechner vorgenommen.

Bei der Meßdatenaufnahme wird eine Arbeitsraumüberwachung durchgeführt, die feststellt, ob der Taster sich im zulässigen Aufnahmebereich befindet.

Die aufgenommenen Daten werden in einem schnellen Zwischenspeicher zwischengespeichert, um eine hohe Abtastrate der aufgenommenen Daten zu erreichen. Der Inhalt des Zwischenspeichers wird dann auf einen weiteren Rechner übertragen und dort auf einem magnetischen Datenträger aufgezeichnet. Dieser Datenträger kann transportabel sein, so daß die Daten auf andere Systeme übertragen werden können. Es kann zum gleichen Zweck auch ein Datenaustausch über eine Schnittstelle vorgenommen werden. Die Daten können so auch zur Fertigung auf einer anderen Vorrichtung benutzt werden.

Die Datenaufnahme erfolgt segmentweise, wodurch bestimmte Segmente der Figur mit Teilen einer anderen Figur kombiniert bzw. errechnete und aufgenommene Meßdaten gemischt werden können. Bei der Aufnahme der Daten und der Übertragung auf das Rechnersystem wird eine Online-Datenreduktion durchgeführt, wobei alle irrelevanten Daten eliminiert werden.

In der Offline-Optimierung wird eine Optimierung des Fertigungsverlaufes zum Beispiel durch Einsparen von Positionierbewegungen und eine Dynamikanpassung durchgeführt.

Weil ein abzutastendes Modell und der dafür notwendige Bewegungsablauf bestimmte dynamische Eigenschaften des Bearbeitungsgegenstandes erfordern, wie beispielsweise Steifigkeit, wird der Bediener die Meßdatenaufnahme nie schneller ausführen, als es diese Eigenschaften zulassen. Weil der Bediener dynamische Fehler bemerken würde, wird er mit der Geschwindigkeit der Meßdatenaufnahme innerhalb der zulässigen Grenzen bleiben. Bei der automatischen Herstellung kann das abgespeicherte Geschwindigkeitsprofil um einen frei zu wählenden Faktor erhöht werden. Damit durch diese Geschwindigkeitserhöhung an kritischen Stellen nicht die zulässige Geschwindigkeit überschritten wird, wird durch die Dynamikanpassung die Geschwindigkeit automatisch auf das höchst zulässige Maß begrenzt. Die höchst zulässige Geschwindigkeit in Abhängigkeit vom Bahnverlauf läßt sich aus den Meßdaten und der Kreisverstärkung der Vorrichtung ableiten. Durch diese Offline-Optimierung ist es möglich, die Vorrichtung beim automatischen Herstellen optimal bis an ihre Leistungsgrenze zu bringen, ohne daß eine Überschreitung der zulässigen Geschwindigkeit erfolgt.

Es besteht auch die Option, die gespeicherten Achspositionen der Vorrichtung in ein universelles Koordinatensystem umzurechnen, wodurch die gewonnenen Daten der Formteile auch für andere Systeme und Maschinen mit abweichender Kinematik benutzt werden können. Es sind auch Maßstabsänderungen, Werkzeugkorrekturen und ähnliche Manipulationen der aufgenommenen Daten möglich. Die Aufnahme der Achsposition ist mit Inkrementalgebern möglich. Die erhaltenen Meßdaten sind entweder von vornherein digital oder werden zur Speicherung digitalisiert.

Die Tasteranordnung kann so gewählt werden, daß spätere Herstellungsschritte von vornherein berücksichtigt werden. So ist es zum Beispiel in einer Fräsvorrichtung notwendig, um Fehler bei der späteren Bearbeitung zu vermeiden, daß der Taster zur Aufnahme der Meßdaten genau die Form des späteren Fertigungswerkzeuges aufweist. Um zunächst die Kontur des Formkörpers grob herauszuarbeiten, wird beim Vorfräsvorgang ein größerer Taster verwendet, so daß die zunächst erzeugte Kontur etwas größer als die endgültige Kontur ausfällt. Bei der Feinbearbeitung kann dann ein kleinerer Taster sowie ein entsprechend kleineres Werkzeug verwendet werden, um feine Details herauszuarbeiten.

Die Vorrichtung zur automatischen Herstellung stellt ein geregeltes System dar. Um Regelschwingungen durch Toleranzen und Spiel in den Lagern zu vermeiden ist es günstig, bei der automatischen Herstellung Geber einzusetzen, die direkt an den Antriebsachsen der Servoantriebe angeordnet sind. Im Gegensatz dazu ist es für die Aufnahme der Daten notwendig, die Meßgeber zur Vermeidung von Fehlern möglichst direkt am Taster anzubringen. Falls nicht zur Meßdatenaufnahme und zur Herstellung verschiedene Geberanordnungen eingesetzt werden sollen ist es daher notwendig, die Getriebelose durch spielfreie Maschinenelemente zu eliminieren.

Weitere Ausgestaltungen der Erfindung ergeben sich aus den Unteransprüchen.

Im folgenden werden einige Ausführungsbeispiele der Erfindung anhand von Zeichnungen näher erläutert.

In den Figuren zeigt
- Fig. 1: einen herkömmlichen Kopierpanthographen mit der erfindungsgemäßen Vorrichtung,
- Fig. 2: einen Kopierpanthographen als zweite Ausführungsform der Erfindung,
- Fig. 3: eine Vorrichtung mit einem Aggregateträger als weitere Ausführungsform der Erfindung,
- Fig. 4: die Meßdatenaufnahme mit einer Bearbeitungsvorrichtung, und
- Fig 5: einen Linear-Asynchronmotor mit einer elektrischen Trennvorrichtung.
- Fig. 6: eine Vorrichtung mit einer hydraulischen Trennvorrichtung gemäß einer weiteren Ausführungsform.

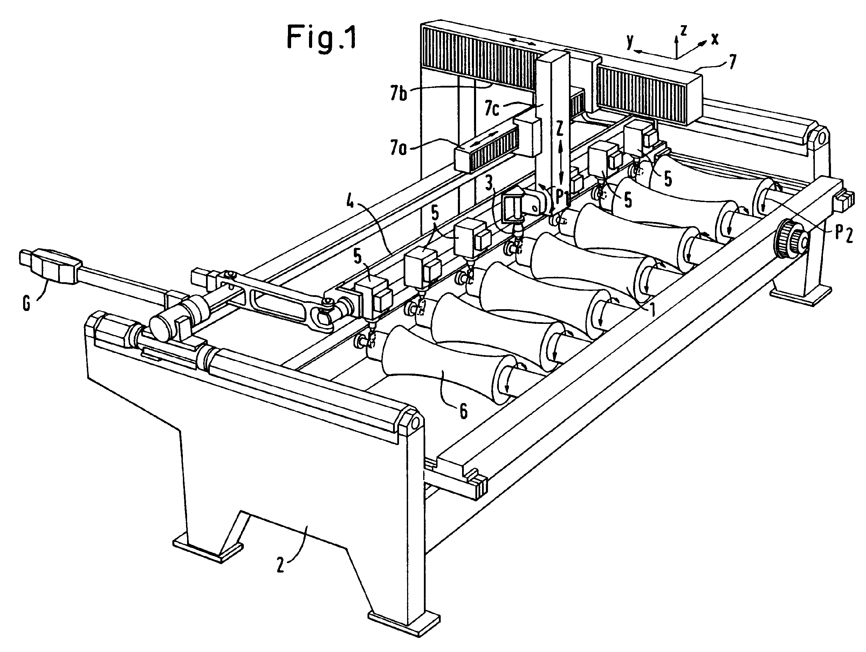

Fig. 1 verdeutlicht einen Kopierpanthographen mit einer erfindungsgemäßen Vorrichtung als erste Ausführungsform der Erfindung. Es sind mehrere Bearbeitungsaggregate 5 auf einem Aggregateträger 4 angeordnet. Während mit einem Taster 3 ein Modell 1 abgetastet wird, bearbeiten die Bearbeitungsaggregate 5 mehrere Formteile 6. Die Vorrichtung weist mehrere Achsen x, y, z, P1 auf, über die die Bewegungen der Bearbeitungsaggregate zum Herstellen der Formteile erfolgen können und an denen die Meßdatenaufnahme erfolgt. Die Formteile 6 können um die Rundachse P2 am Kopierpanthographen für eine Rundumbearbeitung gedreht werden. Der Kopierpanthograph stabilisiert den Aggregateträger und sorgt über die Ausgleichsgewichte G für einen Ausgleich der Gewichtskräfte durch den Aggregateträger.

Die erfindungsgemäße Vorrichtung besitzt in diesem Fall drei Linear- und zwei Rundachsen. Die Rundachse P1 befindet sich neben dem Taster auf dem Aggregateträger.

Eine weitere Rundachse P2 befindet sich am Werkstückträger des Kopierpanthographen. Die Positionen dieser Zusatzachse werden bei der Datenaufnahme und -wiedergabe mit erfaßt.

Die Vorrichtung besitzt eine Antriebseinheit 7, die mit Hilfe von geregelten Asynchron-Linearmotoren 7a - 7c und einem rotierenden Asynchronmotor die automatische Herstellung der Formteile nach erfolgter Meßdatenaufnahme antreibt. In dieser Ausführungsform kann die erfindungsgemäße Vorrichtung auch nachträglich an vorhandene Kopiermaschinen angebaut werden.

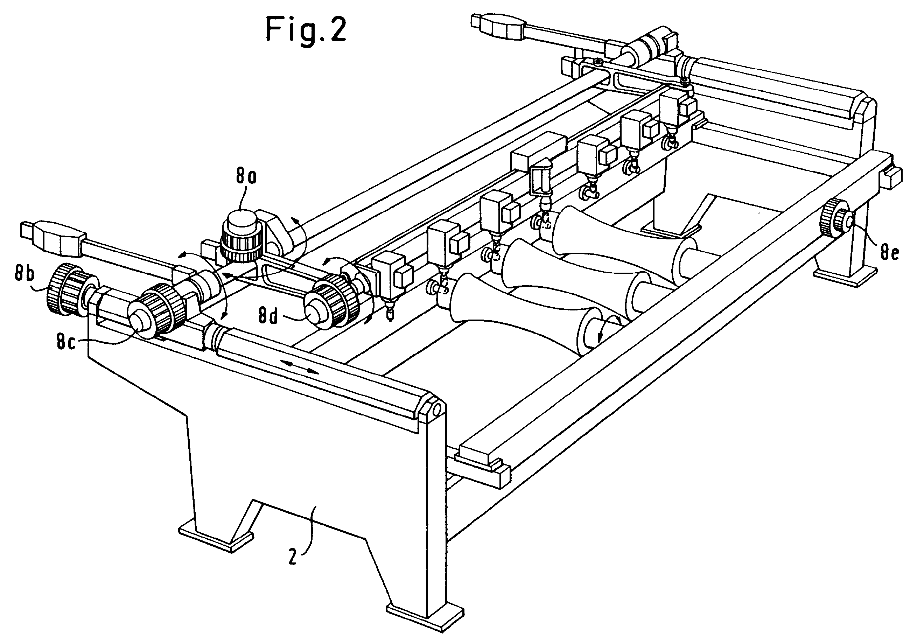

In Fig. 2 ist ein Kopierpanthograph 2 ähnlich der in Fig. 1 gezeigten Anordnung dargestellt, wobei in diesem Fall drei Rund- und eine Linearachse verwendet werden. Die Servoantriebe und Meßdatenaufnahmeeinrichtungen 8a bis 8e sind in Schwenklagerungen des Kopierpanthographen 2 integriert.

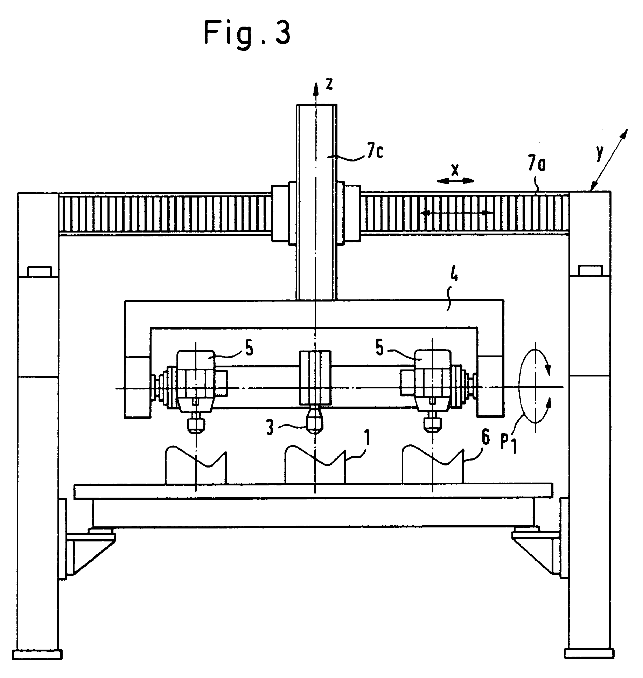

Fig. 3 verdeutlicht eine Vorrichtung mit einem Aggregateträger 4 sowie einem Taster 3 und Bearbeitungsaggregaten 5. Die Vorrichtung weist drei Linearachsen x, y, z mit den entsprechenden Antrieben 7a, 7b (nicht dargestellt), 7c und eine Rundachse P1 auf. Ein Gewichtsausgleich für den Aggregateträger erfolgt hier pneumatisch und ist in der z-Achse der Vorrichtung integriert.

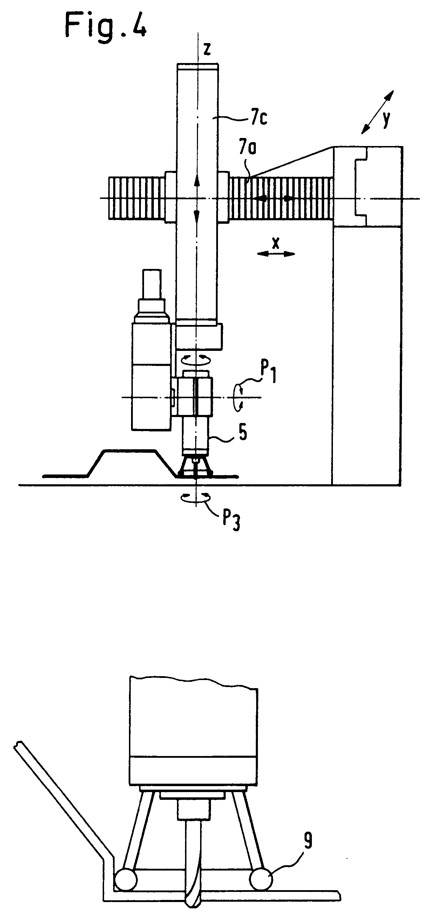

In Fig. 4 ist ein Ausschnitt einer erfindungsgemäßen Vorrichtung mit einem Bearbeitungsaggregat 5, in diesem Fall einem Fräsaggregat, dargestellt. Das Bearbeitungsaggregat kann in Richtung dreier Linearachsen x, y und z und zweier Rundachsen P1 und P3 bewegt werden. Zur Meßdatenaufnahme wird ein Abtastring 9 an dem Bearbeitungsaggregat 5 von Hand an einer gewünschten Modellkontur entlanggeführt, wobei gleichzeitig eine Bearbeitung des Werkstücks erfolgt. Zur nachfolgenden automatischen Bearbeitung wird der Abtastring 9 entfernt.

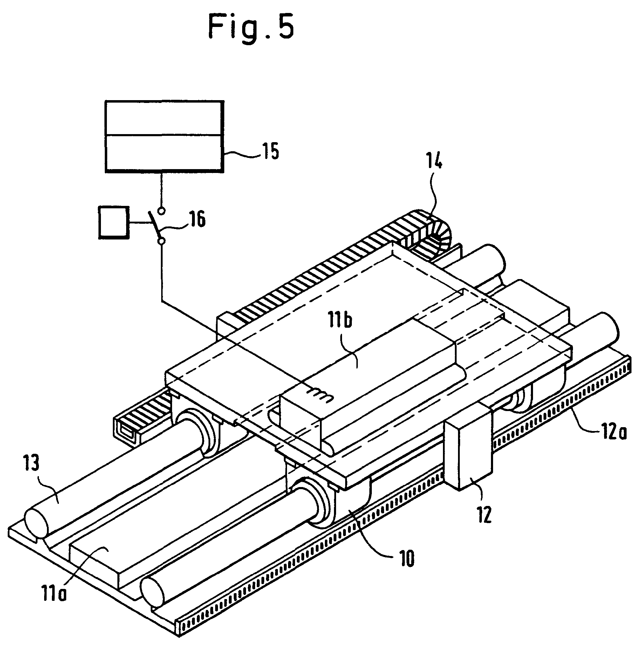

Fig. 5 betrifft einen Linear-Asynchronmotor, der als Antrieb für eine Linearbewegung dient. Dieser Servoantrieb weist einerseits einen Antriebsteil, bestehend aus Sekundärteil 11a und Primärteil 11b, und andererseits Linearachsen 13 zur Linearführung, einen Vorschubschlitten 10 mit Trägerplatte, verbunden mit dem Primärteil 11b, sowie Anschlußleitungen 14 zur Versorgung und Steuerung auf. Mit einem linearen Wegmeßsystem 12, 12a wird die tatsächliche Position des Vorschubschlittens 10 aufgenommen. Ein Führungssystem 15 sorgt mit den von dem Wegmeßsystem 12, 12a erhaltenen Daten für eine Regelung der Position. Um die Meßdatenaufnahme von Hand durchzuführen, muß nur die Energieversorgung für den Linear-Asynchronmotor unterbrochen werden, so daß keine Kräfte zwischen den beiden Teilen des Asynchronmotors übertragen werden. Es reicht aus, wenn mit dem Schalter 16 die Erregung des Primärteils 11b abgeschaltet wird. Das lineare Wegmeßsystem 12, 12a dient dann zur Aufnahme der entsprechenden Meßdaten.

Das Führungssystem ist in diesem Fall separat ausgeführt. Es kann jedoch auch Bestandteil eines zentralen Steuerrechnersystems sein, in dem auch die Bearbeitung der Meßdaten durchgeführt wird.

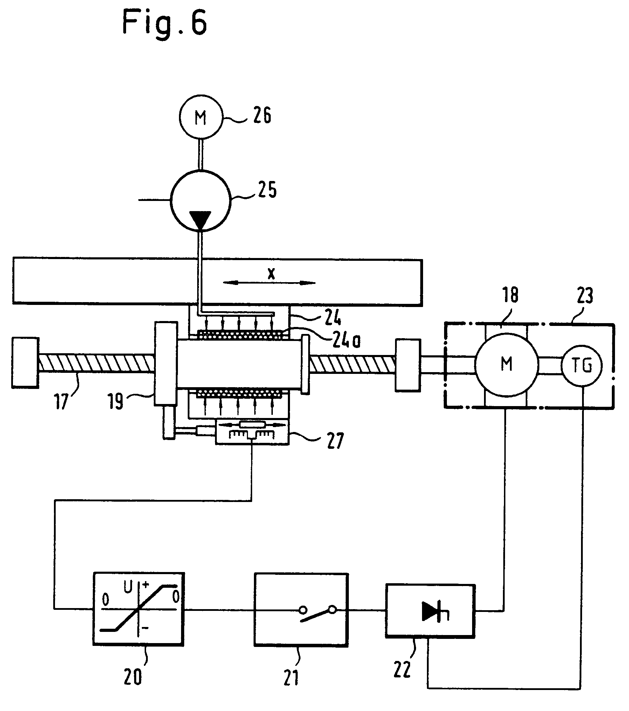

Fig. 6 zeigt einen Teil einer Vorrichtung gemäß einer weiteren Ausführungsform der Erfindung, bei der eine Vorschubachse als Gewindespindel 17 ausgeführt ist. Die Drehung wird durch einen Servoantrieb 23 mit einem Tachogenerator TG und einem Motor 18 bewirkt. Bei der automatischen Herstellung bewirkt die Drehung der Spindel 17, daß die Gewindemutter 19 in Richtung der Achse x bewegt wird. Bei der Herstellung ist die Gewindemutter mit dem Vorschubschlitten 24 fest verbunden. Der Vorschubschlitten wird deshalb zusammen mit der Gewindemutter und eventuell vorhandenen Bearbeitungsaggregaten in Richtung der Vorschubachse x bewegt.

Ein Taster zur Meßdatenaufnahme ist mit einem der Vorschubschlitten für die verschiedenen Achsen, in diesem Fall mit dem Vorschubschlitten 24 verbunden. Ein freies Bewegen des Schlittens von Hand wäre bei einer derartigen Anordnung normalerweise nicht möglich, auch wenn der Antrieb des Motors abgetrennt wäre, weil Gewindespindeln bei lateraler Krafteinleitung große Rotationswiderstände haben.

Daher ist die Möglichkeit vorgesehen, daß die Verbindung zwischen der Gewindemutter und dem Vorschubschlitten gelöst wird, so daß der Vorschubschlitten 24 gegenüber der Gewindemutter 19 verschiebbar ist. Dies wird erreicht durch eine Dehnhülse 24a, die mit einer Hydraulikeinrichtung 25, 26 in einen Klemmzustand oder Freigabezustand schaltbar ist. Zur Meßdatenaufnahme von Hand wird der Kraftfluß über die Dehnhülse zwischen der Gewindemutter und dem Vorschubschlitten unterbrochen. Wird der Vorschubschlitten 24 gegenüber der Gewindemutter 19 verschoben, dann stellt ein Positionssensor 27 eine Lageänderung fest und zeigt die Abweichung durch ein entsprechendes Signal an. Dieses Signal wird auf eine Wandlerstufe 20 gegeben, welche einen Sollwert an eine Schaltstufe 21 liefert, die dann ein Signal an den Motorverstärker 22 des Vorschubachsenregelkreises 22, 23, gibt. Der Motor 18 dreht die Gewindespindel 17 solange, bis die am Positionssensor 27 gemessene Abweichung null wird. Die Gewindemutter folgt auf diese Weise jeder Schlittenbewegung ohne äußere Verschiebekräfte. Zum Verschieben müssen nur noch Masse und Reibungskräfte des Schlittens selbst überwunden werden.

Die Klemmung erfolgt in diesem Ausführungsbeispiel hydraulisch. Es ist jedoch auch möglich, eine pneumatische, elektromechanische oder elektromagnetische Klemmung durchzuführen und eine reib- oder formschlüssige Kraftübertragung vorzusehen.

Das beschriebene Prinzip ist auch auf andere Vorschubsysteme wie beispielsweise einen Zahnstangenantrieb anwendbar.

Es besteht des weiteren die Möglichkeit, den Sollwert, der durch die vom Positionssender 27 erfaßte Abweichung erzeugt wird, in der Art zu begrenzen, daß eine maximale Verschiebegeschwindigkeit nicht überschritten wird. Bei Überschreiten der Geschwindigkeit erfolgt automatisch ein Klemmen der Klemmeinrichtung 24a, 25, 26. Diese Möglichkeit ist insbesondere dann von Bedeutung, wenn die Meßdatenaufnahme taktgesteuert erfolgt und durch eine zu hohe Geschwindigkeit eine zulässige Toleranzbreite überschritten würde.

Es ist bei dieser Ausführungsform möglich, daß ein Bearbeitungsaggregat zusammen mit dem Taster durch die Bedienungsperson direkt geführt wird, und die Bewegungen der übrigen Vorrichtungen mit weiteren Bearbeitungsaggregaten über die Nachführregelschleife nachgeführt werden. Es ist jedoch auch möglich, daß nur der Taster selbst mit einem sehr klein und leicht ausgeführten Teil der Vorrichtung bewegt wird und sämtliche Bearbeitungssaggregate über die Nachführregelung mit den Servomotoren bewegt werden. In diesem Fall ergibt sich für die Bedienungsperson eine sehr leichte Bedienung ohne große Kraftanstrengung.

## Patentansprüche

1. Vorrichtung zum automatischen Herstellen von Formteilen, insbesondere von komplizierten Formteilen aus Holz oder Kunststoff, als maßstäbliche Kopien von Originalen oder Modellen, mit einer automatischen Herstellungseinrichtung und einer Einrichtung zur Aufnahme von Meßdaten, wobei die Vorrichtung aufweist
- einen zur Meßdatenaufnahme von Hand führbaren Taster (3), insbesondere zur Abtastung eines Modells (1),
- mindestens ein Bearbeitungsaggregat (5) und mehrere Vorschubachsen (x, y, z) zur gleichzeitigen Herstellung mindestens eines Formteils (6) bei der Meßdatenaufnahme,
- eine einen Rechner aufweisende, programmierbare Steuerung (15) zum Speichern der aufgenommenen Meßdaten und zum Steuern der automatischen Herstellung der Formteile mit Werkstückprogrammen, die vorwiegend mit diesen Meßdaten erzeugt werden,
dadurch **gekennzeichnet**, daß
a) die Einrichtung zur Aufnahme der Meßdaten Bestandteil der automatischen Herstellungseinrichtung ist,
b) den Vorschubachsen (x, y, z) geregelte Servoantriebe (7a-7c; 8a-8e; 11; 23) zugeordnet sind, welche bei der automatischen Herstellung die Bewegungen längs der Vorschubachsen (x, y, z) bewirken,
c) zur Meßdatenaufnahme der Kraftfluß zwischen den Servoantrieben (7a-7c; 8a-8e; 11a, 11b; 23) und einem mit dem Taster (3) versehenen Teil (11b; 24) der Herstellungseinrichtung unterbrechbar ist.

2. Vorrichtung nach Anspruch 1,
dadurch **gekennzeichnet**, daß
alle spezifischen Herstellungsdaten, insbesondere Geschwindigkeit, Beschleunigung und Raumkoordinaten des Tasters meßtechnisch erfaßbar sind und in dem Rechner (15) zur Optimierung eines Herstellungsverlaufs veränderbar sind.

3. Vorrichtung nach Anspruch 1 oder 2,
dadurch **gekennzeichnet**, daß
zum Aufnehmen der Meßdaten der Kraftfluß zwischen den geregelten Servoantrieben (7a-7c; 11; 23) und dem mit dem Taster versehenen Teil (11b; 24) der Herstellungseinrichtung automatisch unterbrechbar ist.

4. Vorrichtung nach Anspruch 1, 2 oder 3,
dadurch **gekennzeichnet**, daß
der Kraftfluß mechanisch, elektro-mechanisch oder elektrisch wahlweise übertragbar oder unterbrechbar ist.

5. Vorrichtung nach einem der Ansprüche 1 bis 4,
dadurch **gekennzeichnet**, daß
die Vorschubachsen Linearachsen und Rundachsen sind.

6. Vorrichtung nach einem der Ansprüche 1 bis 5,
dadurch **gekennzeichnet**, daß
zur Meßdatenaufnahme der Kraftfluß zwischen mindestens einem Servoantrieb (7a-7c; 11) und einer entsprechenden Vorschubachse unterbrechbar ist.

7. Vorrichtung nach einem der Ansprüche 1 bis 6,
dadurch **gekennzeichnet**, daß
zur Meßdatenaufnahme der Kraftfluß zwischen mindestens einer mit einem geregelten Servoantrieb versehenen Vorschubachse und einem Vorschubschlitten (24) unterbrechbar ist.

8. Vorrichtung nach Anspruch 7,
dadurch **gekennzeichnet**, daß
der Vorschubschlitten (24) mit einem Bearbeitungsaggregat (5) verbunden ist.

9. Vorrichtung nach einem der Ansprüche 7 oder 8,
**gekennzeichnet** durch
einen Positionssensor (27) zum Erkennen einer Abweichung zwischen der Position des mit dem Taster verbundenen Teils (24) der Herstellungseinrichtung und einer längs der Vorschubachse eingestellten Vorschubposition bei der Meßdatenaufnahme und durch eine Regelvorrichtung (27, 20, 21, 22) für den Servoantrieb (18, 23) zum Nachsteuern der Vorschubposition derart, daß die Abweichung null wird.

10. Vorrichtung nach Anspruch 9,
dadurch **gekennzeichnet**, daß
der mit dem Taster (3) verbundene Teil der Herstellungseinrichtung der Vorschubschlitten (24) ist und die Vorschubposition der Position einer Gewindemutter (19) auf einer zugehörigen Vorschubachse mit Gewindetrieb (17) entspricht.

11. Vorrichtung nach Anspruch 9 oder 10,
dadurch **gekennzeichnet**, daß
die Geschwindigkeit der Aufnahme der Meßdaten dadurch begrenzbar ist, daß bei Überschreiten der maximal erlaubten Aufnahmegeschwindigkeit oder der maximal erlaubten Abweichung der Kraftfluß automatisch wieder zugeschaltet wird.

12. Vorrichtung nach einem der Ansprüche 1 bis 11,
dadurch **gekennzeichnet**, daß
mindestens eine Linearvorschubachse vorgesehen ist, der ein geregelter Linear-Asynchronmotor (11) zugeordnet ist, dessen Energieversorgung zum automatischen Unterbrechen des Kraftflusses abschaltbar ist.

13. Vorrichtung nach einem der Ansprüche 1 bis 12,
dadurch **gekennzeichnet**, daß
mindestens eine von einem Servomotor (18) direkt angetriebene Rundvorschubachse vorgesehen ist, dessen Energieversorgung zum automatischen Unterbrechen des Kraftflusses abschaltbar ist.

14. Vorrichtung nach einem der Ansprüche 1 bis 13,
dadurch **gekennzeichnet**, daß
in allen Vorschubachsen Rollkörperführungen vorgesehen sind.

15. Vorrichtung nach einem der Ansprüche 1 bis 14,
dadurch **gekennzeichnet**, daß
Gegengewichte (G) vorhanden sind, die das Gewicht der Bearbeitungsaggregate (5) ausgleichen.

16. Vorrichtung nach einem der Ansprüche 1 bis 15,
dadurch **gekennzeichnet**, daß
die Meßdaten in kartesischen Koordinaten, in achsbezogenen Winkeln oder Polarkoordinaten aufnehmbar sind.

17. Vorrichtung nach einem der Ansprüche 1 bis 16,
dadurch **gekennzeichnet**, daß
die Bewegungs- bzw. Positionsdaten gespeichert werden und an weitere Vorrichtungen mit gleichem Aufbau übertragbar sind.

18. Vorrichtung nach Anspruch 11,
dadurch **gekennzeichnet**, daß
als Bearbeitungsaggregat ein Fräsgerät (5) vorgesehen ist.

19. Vorrichtung nach einem der Ansprüche 1 bis 18,
dadurch **gekennzeichnet**, daß
mehrere Bearbeitungsaggregate (5) Bestandteil der Herstellungseinrichtung sind.

20. Vorrichtung nach Anspruch 19,
dadurch **gekennzeichnet**, daß
mehrere Bearbeitungsaggregate (5) auf einem Aggregateträger (4) angeordnet sind.

21. Vorrichtung nach Anspruch 20,
dadurch **gekennzeichnet**, daß
der Aggregateträger (4) Bestandteil eines Kopierpantographen (2) ist.

22. Vorrichtung nach Anspruch 21,
dadurch **gekennzeichnet**, daß
der Aggregateträger (4) des Kopierpantographen (2) mit der Herstellungseinrichtung mechanisch verbunden ist.

23. Vorrichtung nach einem der Ansprüche 1 bis 22,
dadurch **gekennzeichnet**, daß
die komplette Anordnung der Vorschubachsen dem Aufbau eines Kopierpantographen entspricht.

24. Vorrichtung nach einem der Ansprüche 1 bis 23,
dadurch **gekennzeichnet**, daß
zum Aufnehmen der Meßdaten ein Modell mit einem bestimmten Taster (Tastring 9) abtastbar ist und die Einstellung und Größe des Tasters im Hinblick auf spätere Herstellungsschritte gewählt ist.

25. Vorrichtung nach einem der Ansprüche 1 bis 24,
dadurch **gekennzeichnet**, daß
die gespeicherten achsbezogenen Meßdaten der Vorschubachsen in ein kartesisches Koordinatensystem umrechenbar sind.

26. Vorrichtung nach einem der Ansprüche 1 bis 25,
dadurch **gekennzeichnet**, daß
eine Einrichtung zum Überwachen des Arbeitsraums bei der Aufnahme der Meßdaten vorgesehen ist.

27. Vorrichtung nach einem der Ansprüche 1 bis 26,
dadurch **gekennzeichnet**, daß
eine Einrichtung zur taktgesteuerten Meßdatenaufnahme und zur Taktanpassung an eine Kontur des Modells in einer Offline-Optimierung vorgesehen ist derart, daß ein zulässiger Fehler nicht überschritten wird.

28. Vorrichtung nach einem der Ansprüche 1 bis 27,
dadurch **gekennzeichnet**, daß
ein bei der Meßdatenaufnahme aufgenommenes Geschwindigkeitsprofil gespeichert wird und für die automatische Herstellung um einen Faktor erhöht wird.

29. Vorrichtung nach den Ansprüchen 27 und 28,
dadurch **gekennzeichnet**, daß
eine höchste zulässige Geschwindigkeit in Abhängigkeit von einem Bahnverlauf und einer Kreisverstärkung der Vorrichtung festgelegt ist, auf die das Geschwindigkeitsprofil durch eine Dynamikanpassung in der Offline-Optimierung begrenzbar ist.

## Claims

1. Apparatus for the automatic manufacture of mouldings, in particular complicated mouldings made of wood or plastic, as true-to-scale copies of originals or models, with an automatic manufacturing device and a device for recording measurement data, wherein the apparatus comprises
- a feeler (3) which can be guided by hand for recording measurement data, in particular for scanning a model (1),
- at least one processing unit (5) and several feed axes (x, y, z) for the simultaneous manufacture of at least one moulding (6) during the recording of measurement data,
- a programmable control system (15) comprising a computer for storing the recorded measurement data and for controlling automatic manufacture of the mouldings with workpiece programmes which are mainly produced with these measurement data,
characterised in that
a) the device for recording measurement data forms part of the automatic manufacturing device,
b) associated with the feed axes (x, y, z) are regulated servo drives (7a-7c; 8a-8e; 11; 23) which during automatic manufacture produce the movements along the feed axes (x, y, z),
c) for the recording of measurement data, the power flux between the servo drives (7a-7c; 8a-8e; 11a, 11b; 23) and a component (11b; 24) of the manufacturing device provided with the feeler (3) can be interrupted.

2. Apparatus according to claim 1, characterised in that all specific manufacturing data, in particular speed, acceleration and spatial coordinates of the feeler can be detected by measurement techniques and varied in the computer (15) to optimise a manufacturing cycle.

3. Apparatus according to claim 1 or 2, characterised in that to record the measurement data the power flux between the regulated servo drives (7a-7c; 11; 23) and the component (11b; 24) of the manufacturing device provided with the feeler can be interrupted automatically.

4. Apparatus according to claim 1, 2 or 3, characterised in that the power flux can be selectively transmitted or interrupted mechanically, electromechanically or electrically.

5. Apparatus according to any of claims 1 to 4, characterised in that the feed axes are linear axes and circular axes.

6. Apparatus according to any of claims 1 to 5, characterised in that to record the measurement data the power flux between at least one servo drive (7a-7c; 11) and a corresponding feed axis can be interrupted.

7. Apparatus according to any of claims 1 to 6, characterised in that to record the measurement data the power flux between at least one feed axis provided with a regulated servo drive and a feed carriage (24) can be interrupted.

8. Apparatus according to claim 7, characterised in that the feed carriage (24) is connected to a processing unit (5).

9. Apparatus according to either of claims 7 or 8, characterised by a position sensor (27) for detecting a divergence between the position of the component (24) of the manufacturing device connected to the feeler and a feed position adjusted along the feed axis, during the recording of measurement data, and by a regulating device (27, 20, 21, 22) for the servo drive (18, 23) for following up the feed position in such a way that the divergence becomes zero.

10. Apparatus according to claim 9, characterised in that the component of the manufacturing device connected to the feeler (3) is the feed carriage (24) and the feed position corresponds to the position of a threaded nut (19) on an associated feed axis with threaded drive (17).

11. Apparatus according to claim 9 or 10, characterised in that the speed of recording the measurement data can be limited by the fact that, on exceeding the maximum permitted recording speed or the maximum permitted divergence, the power flux is automatically reconnected.

12. Apparatus according to any of claims 1 to 11, characterised in that at least one linear feed axis is provided, with which is associated a regulated linear asynchronous motor (11) of which the energy supply can be switched off for automatic interruption of the power flux.

13. Apparatus according to any of claims 1 to 12, characterised in that at least one circular feed axis is provided which is driven directly by a servo motor (18) and of which the energy supply can be switched off for automatic interruption of the power flux.

14. Apparatus according to any of claims 1 to 13, characterised in that rolling body guides are provided in all the feed axes.

15. Apparatus according to any of claims 1 to 14, characterised in that there are counterweights (G) which equalise the weight of the processing units (5).

16. Apparatus according to any of claims 1 to 15, characterised in that the measurement data can be recorded in Cartesian coordinates, in axis-related angles or polar coordinates.

17. Apparatus according to any of claims 1 to 16, characterised in that the movement or position data are stored and can be transmitted to other apparatuses with the same construction.

18. Apparatus according to claim 11, characterised in that a milling device (5) is provided as the processing unit.

19. Apparatus according to any of claims 1 to 18, characterised in that several processing units (5) form part of the manufacturing device.

20. Apparatus according to claim 19, characterised in that several processing units (5) are arranged on a unit carrier (4).

21. Apparatus according to claim 20, characterised in that the unit carrier (4) forms part of a copying pantograph (2).

22. Apparatus according to claim 21, characterised in that the unit carrier (4) of the copying pantograph (2) is mechanically connected to the manufacturing device.

23. Apparatus according to any of claims 1 to 22, characterised in that the complete arrangement of the feed axes corresponds to the construction of a copying pantograph.

24. Apparatus according to any of claims 1 to 23, characterised in that to record the measurement data a model can be scanned with a given feeler (feeler ring 9), and the setting and size of the feeler is selected with regard to subsequent manufacturing steps.

25. Apparatus according to any of claims 1 to 24, characterised in that the stored axis-related measurement data of the feed axes can be converted to a Cartesian coordinate system.

26. Apparatus according to any of claims 1 to 25, characterised in that a device is provided for monitoring the working space during the recording of measurement data.

27. Apparatus according to any of claims 1 to 26, characterised in that a device is provided for the clock-controlled recording of measurement data and for clock matching to a contour of the model in an offline optimisation system in such a way that a permitted error is not exceeded.

28. Apparatus according to any of claims 1 to 27, characterised in that a speed profile recorded during the recording of measurement data is stored and increased by a factor for automatic manufacture.

29. Apparatus according to claims 27 and 28, characterised in that a maximum permitted speed is fixed as a function of a trajectory and a closed-loop gain of the apparatus to which the speed profile can be limited by dynamic matching in the offline optimisation system.

## Revendications

1. Dispositif de fabrication automatique de pièces de forme, en particulier de pièces de forme de configuration compliquée, en bois ou en matière synthétique, à titre de copie à l'échelle d'originaux ou de modèles, avec un dispositif de fabrication automatique et un dispositif d'enregistrement de données de mesure, le dispositif présentant:
- un palpeur (3), pouvant être guidé à la main, en vue d'enregistrer des données de mesure, en particulier pour explorer un modèle (1),
- au moins un groupe de traitement (5) et plusieurs axes de déplacement (x, y, z), pour la fabrication simultanée d'au moins une pièce de forme (6) lors de l'enregistrement des données de mesure,
- une commande (15) programmable comportant un ordinateur, pour stocker les données de mesure enregistrées et pour commander la fabrication automatique des pièces de forme à l'aide de programme pour pièces façonnées, produit principalement à l'aide de ces données de mesure,
caractérisé en ce que,
a) le dispositif d'enregistrement des données de mesure fait partie du dispositif de fabrication automatique,
b) des servo-entraînements (7a à 7c; 8a à 8e; 11; 23) régulés sont associés aux axes de déplacement (x, y, z) et provoquent des déplacement le long des axes de déplacement (x, y, z) lors de la fabrication automatique,
c) en vue d'enregistrer des données de mesure, le flux énergétique entre les servo-entraînements (7a à 7c; 8a à 8e; 11a; 11b; 23) et une partie (11b; 24), pourvue du palpeur (3), du dispositif de fabrication peut être interrompu.

2. Dispositif selon la revendication 1, caractérisé en ce que toutes les données de fabrication spécifique, en particulier la vitesse, l'accélération et les coordonnées dans l'espace du palpeur sont susceptibles d'être appréhendées par des techniques de mesure, et d'être modifiées dans l'ordinateur (15) en vue d'optimiser le déroulement de la fabrication.

3. Dispositif selon la revendication 1 ou 2, caractérisé en ce qu'en vue d'enregistrer les données de mesure, le flux énergétique entre les servo-entraînements régulés (7a à 7c; 11; 23) et la partie (11b; 24), pourvue du palpeur, du dispositif de fabrication peut être interrompue automatiquement.

4. Dispositif selon la revendication 1, 2 ou 3, caractérisé en ce que les efforts peuvent être transmis ou interrompus au choix, par voie mécanique, électromécanique, ou électrique.

5. Dispositif selon l'une des revendications 1 à 4, caractérisé en ce que les axes de déplacement sont des axes linéaires et des axes de rotation.

6. Dispositif selon l'une des revendications 1 à 5, caractérisé en ce qu'en vue d'enregistrer des données de mesure le flux énergétique entre au moins un servo-entraînement (7a à 7c; 11) et un axe de déplacement correspondant peut être interrompue.

7. Dispositif selon l'une des revendications 1 à 6, caracterisé en ce qu'en vue de l'enregistrement de données de mesure le flux énergétique entre au moins un axe de déplacement pourvu d'un servo-entraînement régulé et un chariot de déplacement (24) peut être interrompu.

8. Dispositif selon la revendication 7, caractérisé en ce que le chariot de déplacement (24) est relié à un groupe d'usinage (5).

9. Dispositif selon l'une des revendications 7 ou 8, caractérisé par un capteur de position (27), destiné à identifier un écart entre la position de la partie (24), liée au palpeur, du dispositif de fabrication et une position réglée le long de l'axe de déplacement lors de l'enregistrement de données de mesure et par un dispositif de réglage (27, 20, 21, 22) affecté au servo-entraînement (18, 23), pour procéder à une commande de rattrapage de la position d'avance, de manière à ramener l'écart à zéro.

10. Dispositif selon la revendication 9, caractérisé en ce que la partie, liée au palpeur (3), du dispositif de fabrication est le chariot de déplacement (24), et la position d'avance correspond à la position d'un écrou taraudé (19) vissé sur un axe de déplacement afférent et doté d'une liaison par filetage (17).

11. Dispositif selon la revendiacation 9 ou 10, caractérisé en ce que la vitesse de l'enregistrement des données de mesure peut être limitée du fait que l'effort exercé est automatiquement réglé, en cas de dépassement d'une valeur d'enregistrement maximale admissable ou d'un écart maximal admissible.

12. Dispositif selon l'une des revendications 1 à 11, caractérisé en ce qu'est prévu au moins un axe de déplacement linéaire, auquel est associé un moteur asynchrone linéaire (11) régulé, dont l'alimentation en énergie peut être coupée pour interrompre automatiquement l'effort exercé.

13. Dispositif selon l'une des revendications 1 à 12, caractérisé en ce qu'est prévu au moins un axe d'avancement à mouvement de rotation à entraînement direct depuis un servomoteur (18), dont l'alimentation en énergie peut être coupée en vue d'interrompre automatiquement la transmission d'un effort.

14. Dispositif selon l'une des revendiactions 1 à 13, caractérisé en ce que des guidages à corps de roulement sont prévus dans tous les axes de déplacements.

15. Dispositif selon l'une des revendications 1 à 14, caractérisé en ce que des contrepoids (G) sont prévus, compensant le poids des groupes d'usinage (5).

16. Dispositif selon l'une des revendications 1 à 15, caractérisé en ce que les données de mesure peuvent être enregistrées en coordonnées cartésiennes, en angles se référant à chacun des axes, ou bien en coordonnées polaires.

17. Dispositif selon l'une des revendications 1 à 16, caractérisé en ce que les données de déplacement, respectivement de position sont stockées et peuvent être transmises à d'autres dispositifs présentant la même structure.

18. Dispositif selon la revendication 11, caractérisé en ce qu'un appareil de fraisage (5) est prévu à titre de groupe d'usinage.

19. Dispositif selon l'une des revendications 1 à 18, caractérisé en ce que plusieur groupes d'usinage (5) font parties du dispositif de fabrication.

20. Dispositif selon la revendication 19, caractérisé en ce que plusieurs groupes d'usinage (5) sont disposés sur un support de groupes (4).

21. Dispositif selon la revendication 20, caractérisé en ce que le groupe support (4) fait partie d'un pantographe de copiage (2).

22. Dispositif selon la revendication 21, caractérisé en ce que le support de groupe (4) du pantographe de copiage (2) est relié mécaniquement au dispositif de fabrication.

23. Dispositif selon l'une des revendications 1 à 22, caractérisé en ce que l'agencement complet des axes de déplacement correspond à la structure d'un pantographe de copiage.

24. Dispostif selon l'une des revendications 1 à 23, caractérisé en ce que, pour enregistrer les données de mesure, un modèle peut être exploré avex un palpeur (bague de palpage 9) déterminé et le réglage et la taille du palpeur étant choisis eu égard aux étapes de fabrication subséquente.

25. Dispositif selon l'une des revendications 1 à 24, caractérisé en ce que les données de mesure liées aux axes, ayant été stockés et concernant les axes de déplacement, peuvent être recalculées dans un système de coordonnées cartésiennes.

26. Dispositif selon l'une des revendications 1 à 25, caractérisé en ce qu'est prévu un dispositif, pour surveiller l'espace de travail lors de l'enregistrement des données de mesure.

27. Dispositif selon l'une des revendications 1 à 26, caractérisé en ce qu'est prévu un dispositif pour enregistrer de façon commandée, cadencée, des données de mesure et pour effectuer une adaption cadencée à un contour du modèle, d'après une optimisation "offline" de manière à ne pas dépasser une valeur d'erreur admissible.

28. Dispositif selon l'une des revendications 1 à 27, caractérisé en ce qu'est stocké un profil de vitesse enregistré lors de l'enregistrement des données de mesure, ce profil étant augmenté de la valeur d'un facteur, pour la fabrication automatique.

29. Dispositif selon les revendications 27 et 28, caractérisé en ce qu'une vitesse maximal admissible, fonction de l'allure de la trajectoire et de l'amplification du circuit du dispositif est fixée, vitesse à laquelle le profil de vitesse peut être limité par adaption dynamique lors de l'optimisation "offline".
